# EUROPEAN PATENT SPECIFICATION

(11) **EP 0 861 702 B1**
(45) Date of publication and mention of the grant of the patent: **29.10.2003**
(21) Application number: 96928749.9
(22) Date of filing: 25.06.1996
(51) Int. Cl.: B23H 9/06, G06K 19/16, G03F 7/00, G03H 1/02

(54) **METHOD OF PROTECTING PRECIOUS METAL ARTICLES FROM COPYING (VARIANTS)**
VERFAHREN ZUR FÄLSCHUNGSSICHERUNG VON EDELMETALLGEGENSTÄNDEN UND ENTSPRECHENDE VARIANTEN
PROCEDE DE PROTECTION D'ARTICLES FAITS DE METAUX NOBLES CONTRE LES CONTREFACONS, ET VARIANTES

(30) Priority: 31.08.1995 RU 95114408; 14.05.1996 RU 96108659
(43) Date of publication of application: 02.09.1998
(73) Proprietor: Argor-Heraeus S.A., 6850 Mendrisio (CH)
(72) Inventor: BALAGUROV, Alexei Yakovlevich, Moscow, 103482 (RU); IVANOV, Vladimir Valentinovich, Moscow, 127490 (RU); INKIN, Vitaly Nikolaevich, Moscow, 103482 (RU); PUTILIN, Andrei Nikolaevitch, Moskovskaya obl., 142092 (RU); SELISCHEV, Sergei Vasilievich, Moscow, 103482 (RU); UKHANOV, Sergei Ivanovich, Moscow, 129348 (RU)
(74) Representative: Kühn, Hans-Christian
(86) International application number: RU9600172
(87) International publication number: WO97007922

(56) References cited:
- EP-A- 0 604 900
- EP-A- 0 604 943
- DE-A- 3 424 377
- FR-A- 2 688 615
- GB-A- 1 535 420
- GB-A- 2 200 868

## Description

### Field of engineering

The invention suggests methods to protect articles of historic or material value or pieces of arts from imitation and can be used to prevent intrusion of counterfeit items to the market of articles made of precious metals.

### Level of development in this field of engineering prior to the invention

Previously known methods of protection of articles of a high value from imitation suggested applying to the surface of an article a mark as a signature, symbol, graphic or some other information such as, for example, particular properties of the material that could be achieved with the use of a special method known to the author of the mark only.

However, the first two methods are easy to imitate that allows for s unauthorized use of the mark and production of counterfeit articles.

The third method is more informative and can be used in different methods of applying to the article a mark made of common but specially treated materials.

For example, we know the method of applying a mark to articles (SU 1757864 A1, B25H 7/00, 1992) and per it a preliminary prepared mark made of dielectric material with structural heterogeneous elements created within a specified area is applied to the surface of an item. The structural heterogeneous elements are cavity systems of capillaries developed in the dielectric when affected simultaneously by a thermal field and a beam of electrolytes. The mark can be attached to the article by different means, for example, by a glued joint.

As a specific sector of heterogeneous elements created within a specified area cannot be either repeated or copied this method of applying a mark to articles is a reliable method of protection from imitation. However, when used in mass production this method demands a large number of marks to be prepared and a database for the product identification. All the above facts make this method very complicated requiring expensive equipment. Besides, this kind of a mark can be easily removed and placed onto another article that makes it impossible to identify the latter. Another disadvantage of this method is that when reprocessing an article the mark material causes modifications in the material of the article marked.

Another method of applying a mark of advanced information content represents a process of photolithography according to which the surface of the article is covered with a layer of photoresist material and exposed under a flexible negative put on the surface of an article. After exposing the photoresist material is etched until the required image is received on the surface (SU 306978 A1, B41 M 1 /40, 1971).

This method allows to receive a mark of advanced information content that Is hard to copy. Yet this technology is so uncomplicated that to follow it without a proper authorization does not present considerable difficulties and therefore it creates preconditions for the mark imitation. Besides, the mark of an article received by this technology is attached to the article material in a very insecure manner and can be quite easily segregated from its surface.

Another technology of application of a mark of advanced information content to the article is based on receiving in the article material of a holographic microrelief created as a surface changing in a special manner under a modulation algorithm known only to the mark manufacturer.

However, up to these days the development of the technology creating a holographic microrelief on the surface of the article was limited by the properties of its material, usually readily moldable polymers, such as vinyl carbazole polymer and polycarbonate. (See for example "Optical Holography", Managing Editor G. Kolfid, Moscow, "Mir", 1982, p. 465). The method of hologram application to the metal surface is known only for foiled articles and is not known for solid items such as plates, bullions, etc. Therefore, it explains why a traditional technology of holographic microrelief transfer by extrusion to the surface of the articles made of materials firmer than plastics does not allow to receive a proper quality of a mark hologram.
EP-A-0064780 discloses a method for treating a gem stone to cause a marking thereon, wherein a photoresist resin is secured to the stone, a photographic film bearing the desired marking is applied over said resin, said resin is developed by exposing same to a light source. The exposed portions are removed and the stone is subjected to a cathode bombardement in order to etch the unprotected parts of the stone.

### Presentation of the Invention

The purpose of the invention is to create a method (variants) of protection of massive articles (plates, bullions, etc.) made of precious metals from imitation so that the marks received were of high informative content and inseparable from articles. Besides, the task of copying the mark shall be or impossible to complete and the possibility for unauthorized use of the mark shall be excluded. Also the material of the marked item shall not suffer modifications when reprocessed.

The problem is solved by the independend claims. To protect articles (plates, bullions, etc.) made of precious metals from imitation by creating a certain image on their a photolithographic method is employed to form a mark. For this purpose the surface of a gold article or any other item made of precious metal is covered with a layer of photoresist material and within it a negative image of the mark is received. Then the area of ist location is covered with a film of amorphous adamantine substance utilizing the method of ion plasma jet spray-coating of carbon and after that the layer of photoresist material is etched with an organic solvent.

It is advisable to use dimethylformamide as an organic solvent.

Variant 2 of the invention suggests to solve the problem of protection of articles made of gold or any other precious metal from imitation by applying a film of amorphous adamantine substance to the surface of the article utilizing the method of ion plasma jet carbon spray-coating, then a layer of photoresist material is applied and within it a positive image of the mark is received. After that amorphous adamantine coating not being protected with photoresist material as well as a layer of photoresist are etched in oxygen plasma.

Variant 3 of the invention suggests to solve the problem of protection of articles made of gold or any other precious metal from imitation by applying a mark of information content to the surface so that it can later be visually identified. In accordance with the invention the mark on the surface of an article made of gold or any other precious metal is formed as a holographic microrelief with sections of macrorelief and the mark is identified when placed in the field of a reconstructing wave.

It is advised to create macrorelief sections using a method of electric spark.

In variant 4 of the invention the problem of protection of articles made of gold or any other precious metal from imitation is solved by applying a composite hologram as a mark on the article surface. For it holographic microrelief of the mark picture is created with a latent encoded hologram in it. The identification of the mark is carried out by means of visualization of the latent hologram picture when the composite hologram of the mark is placed in the optical field of the wave reconstructing the encoded hologram.

The encoded hologram on the holographic microrelief of the mark picture can be formed using several reference beams of point sources located in specially stipulated points. In this case the reconstructing wave for the mark identification will be obtained by placing coherent light sources to the same points where the reference beams were located.

The encoded hologram on the holographic microrelief of the mark picture can also be formed as a synthesized multiplex hologram consisting of a complex of holograms of each symbol of the latent hologram. In this case every particular hologram of symbols of the mark latent hologram is received by removal of microrelief ridges in microsections establishing in the aggregate a negative image of a 2-D Fourier-transformation of a latent hologram symbol.

The encoded hologram can be disguised by applying another multiplex hologram on it consisting of holograms of several images. To visualize the latent hologram in this case it is necessary to use a preliminarily prepared amplitude phase code mask with ports of transmittence for latent hologram beams.

Variant 5 of the invention suggests to solve the problem of protection of articles made of gold or any other precious metal from imitation by constructing on the surface of the article a holographic microrelief mark coated with a film of amorphous adamantine substance. The mark is identified when its hologram is placed in the field of a reconstructing wave. When applying the film coating its depth on the microrelief ridges is less than that on its grooves.

In variant 6 of the invention the problem of protection of articles made of gold or any other precious metal from imitation is solved by forming on the surface of the article the mark as a composite multiplex hologram with microreliefs of its components shifted from each other at a distance shorter than a length of a reconstructing wave. Some parts of the composite hologram are coated with a transparent film of dielectric so that when the mark is visually identified in a re constructing wave the shift of the mark image components is neutralized.

The above characteristics comprise a group of inventions united by a common conception of the author and all the inventions within this group are of the same character and purpose. The aggregate of the technical results of all the inventions of this group allows to fulfill a set task and at the same time considering every particular aggregate of the technical results of each invention we observe a coincidence of some technical results which is a necessary condition for an invention presented in a few variants.

Every presented above characteristics of different variants of the suggested method are required for reaching one or another technical result and in the aggregate it provides for the solution of the problem.

The first two variants using the method of photolithography are implemented subject to the required film coating depth by two different continuous procedures allowing to receive a mark image on the article within a wide range of the film coating depth. Variant 2 secures a proper mark material adhesion with the article made of precious metal and, therefore, reduces the risk of the mark destruction and provides for a reliable identification of the marked article.

Photolithography allows to create very accurate images on different materials with the size of elements as miniature as a micron or less as this method utilizes masks of high resolving capacity and it considerably improves the clearness of the mark image on the article and therefore hampers its imitation.

Another factor that effects reliability of the. product identification is the film coating made of amorphous adamantine substance which is characterized by a high magnitude of refractive index that reduces the risk of mistaking when identifying the pattern. Besides, the above coating proves to have the highest adhesion properties with the material of the article without diffusion of the film coating material to the article material that could cause its contamination and possible washout of the mark. In addition, the film coating utilization combined with a possibility to form a mark image of high resolution allows to construct on the surface of the article the mark of a composite graphic image in a color range with an interference effect that serves as another factor hampering the mark imitation.

Being reprocessed, for example, when articles made of precious metals are remelted, the film coating is completely burnt and as a result the material of the mark is not mixed with the main article material and does not change its chemical composition.

In the other four variants of protection of articles made of precious metals from imitation a method of holographic microrelief application is employed. The below is presented the significance of characteristics identifying every variant.

In variant 3 a combination of micro and macrorelief provides for econstruction of the mark image in the scattered light and prevents from unauthorized reproduction of the mark on the surface of the article by means of galvanoplastics.

In variant 4 a latent hologram representing an encoded hologram on holographic microrelief of the mark picture does not only prevent from unauthorized reproduction of the mark but also makes it impossible to visually identify the mark without special equipment.

Variants 5 and 6 suggesting application of a film coating of amorphous 1 adamantine substance to the mark holographic relief do not only hamper unauthorized reproduction of the mark the same as the previous variants but also prevent from unauthorized reproduction of the mark by means of galvanoplastics and secure the mark from damage. Besides, in variant 5 extra clearness characteristics are obtained.

The suggested variants of protection of articles made of precious metals from imitation can be implemented utilizing approved means only that secures the compliance of the invention presented with the patent requirements in "industrial applicability' criterion. The method of holographic microrelief creation on the surface of the article made of metal (plate, bullions, etc.) is described in the materials of the application.

The applicant is not familiar with any methods of protection of articles made of precious metals from imitation utilizing methods of photolithography or holography even though the above methods are widely used in other spheres of the human activity and therefore the invention complies with the patent requirements in "novelty" and "invention level" criteria.

### Brief description of drawings.

Hereinafter the invention is illustrated by drawings where:
Fig. 1 - Mark identification with the help of several reconstructing light 20 sources;

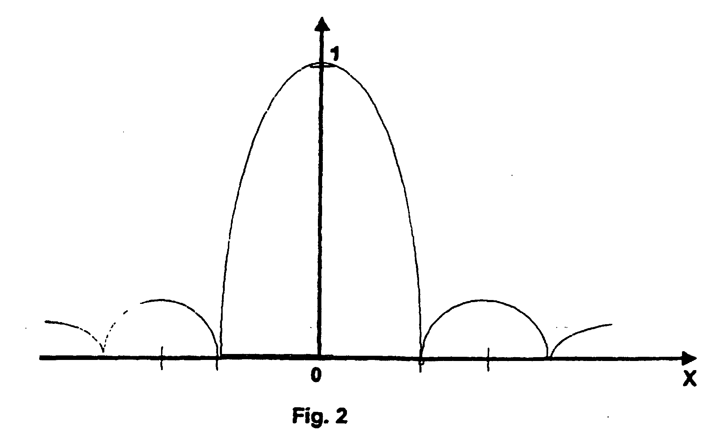

Fig. 2 - Module chart of Fourier-image of the square;
Fig. 3 - Holographic microrelief of the square;

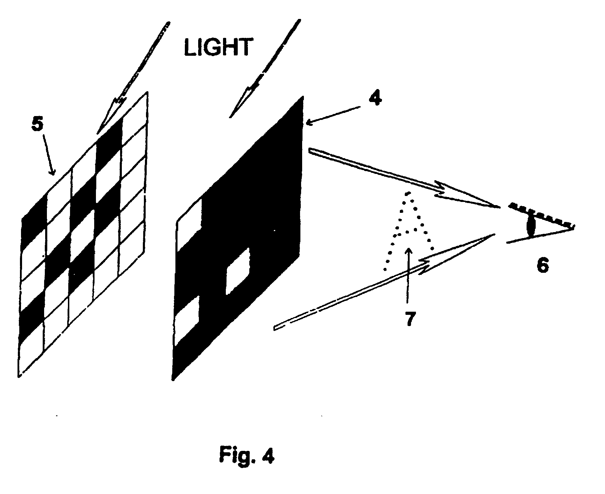

Fig. 4 - Mark identification with an amplitude phase code mask.

### Data confirming the invention feasibility

At first there comes the description of variants 1 and 2 of the invention utilizing the method of photolithography followed by the other four variants with a method of holographic microrelief formation on the surface of precious metals.

In the first two variants of the mark application the main parameter is the depth of the film coating as it predetermines the color of the mark (due to the coating interference) and defines the sequence of procedures when implementing every variant of the suggested method.

With the depth of the coating up to 0.3 x 10⁻¹² m the mark is applied in the following manner.

First, a preliminary negative .image of the mark as a relief layer of photoresist material with the exposed parts corresponding to the mark picture is performed on the surface of the article made, for example, of 99.9% purity gold by means of photolithography.

After it amorphous adamantine coating is applied to the photoresist surface, for example, utilizing the method of ion plasma jet spray-coating of carbon. This particular coating on those sections of the article surface that correspond to the exposed sections of photoresist make a mark picture. For the considered range of a coating depth the height of the unexposed sections of the photoresist material exceeds its depth.

After the coating is applied a preliminary mark image is formed. For it the layer of photoresist is removed from the surface of the article, for example, with the help of chemical etching. Different organic solvents such as, for example, dimethylformamide can be used as etching reagents.

As the depth of the film coating is less than its height the etching reagent permeates into its unexposed sections disintegrating them by removing the photoresist material from the surface of the article. As the film coating applied to the unexposed sections of the photoresist has no contact with the surface of the article it removes easily together with the photoresist. After it the final image of the mark formed by the film coating is left on the surface of the article.

With a considerable depth of the film coating comparable to the height of the photoresist layer when forming the preliminary mark image the etching reagent cannot permeate to the unexposed layer of the photoresist material and as there will be no disintegration and removal of the photoresist material together with the applied coating the final mark image will not be formed.

That is why with the coating depth above 0.3 x 10⁻¹² m the mark application to the article is performed as follows.

At first amorphous adamantine substance is applied to the supposed mark location on the surface of the article utilizing the method of ion plasma jet spray-coating of carbon and after that a preliminary positive image of the mark is received as a relief layer of the photoresist material with unexposed sections corresponding to the mark image. Further the preliminary image of the mark is etched with oxygen plasma as an etching reagent so that the coating unprotected by the photoresist material is removed from the surface by the etching reagent.

Affected by oxygen plasma unexposed sections of the photoresist material are also disintegrated and removed from the surface of the coating.

Thus, a final image of the mark is created as formed by the coating corresponding to the unexposed sections of the photoresist material.

The mark image takes a form of a picture transferable from the mask to the article surface with colors predetermined by the depth of the mark material with an interference effect.

The risk of the mark destruction is minimized due to a high degree of the mark material (adamantine carbon coating) adhesion to the article material. In this case the risk of the mark transfer from one item to another is eliminated. Applied to the unexposed sections of the photoresist has no contact with the surface of the article it removes easily together with the photoresist. After it the final image of the mark formed by the film coating is left on the surface of the article.

With a considerable depth of the film coating comparable to the height of the photoresist layer when forming the preliminary mark image the etching reagent cannot permeate to the unexposed layer of the photoresist material and as there will be no disintegration and removal of the photoresist material together with the applied coating the final mark image will not be formed.

That is why with the coating depth above 0.3 x 10⁻¹² m the mark application to the article is performed as follows.

At first amorphous adamantine substance is applied to the supposed mark location on the surface of the article utilizing the method of ion plasma jet spray-coating of carbon and after that a preliminary positive image of the mark is received as a relief layer of the photoresist material with unexposed sections corresponding to the mark image. Further the preliminary image of the mark is etched with oxygen plasma as an etching reagent so that the coating unprotected by the photoresist material is removed from the surface by the etching reagent.

Affected by oxygen plasma unexposed sections of the photoresist material are also disintegrated and removed from the surface of the coating.

Thus, a final image of the mark is created as formed by the coating corresponding to the unexposed sections of the photoresist material.

The mark image takes a form of a picture transferable from the mask to the article surface with colors predetermined by the depth of the mark material with an interference effect

The risk of the mark destruction is minimized due to a high degree of the mark material (adamantine carbon coating) adhesion to the article material. In this case the risk of the mark transfer from one item to another is eliminated.

Unauthorized production of the mark on the surface of the article, that is mark imitation, is practically impossible due to a large volume and a complicated character of information to be reproduced. Direct copying of the mark from the surface of the article utilizing the method of galvanoplastics is also impossible. At the same time with the help of approved optical and electromagnetic means it is not a problem to define typical parameters of the information contained in the mark in order to establish authenticity of the mark and to distinguish between marked articles.

Thus, both considered variants provide for reliable marking of articles, prevention from imitation and defining of articles belonging to one or another type with a high degree of credibility. All the above facts prove that the suggested variants provide reliable protection of articles made of precious metals from imitation.

The procedure that unites the four following variants is creation of holographic microrelief of the mark on the surface of an article made of precious metal. Exposed to the reconstructing wave of light the formed microrelief allows to visualize a latent hologram of the mark.

Holographic microrelief of the mark on the surface of an article made of gold or any other precious metal can be formed by a method of extrusion with the help of a matrix with its functional surface performed as a steel plate carrying the required holographic microrelief on its surface. As for the holographic microrelief on the steel surface of the matrix it is performed in the following way.

By the method of centrifugal separation a steel plate is coated with photoresist material 1-2 x 10⁻¹² m deep. Then utilizing the method of argon ion beam etching the photoresist is evenly etched up to 0.5-1.0 x 10⁻¹² m deep. Further, with the help of the equipment commonly used for image holographic recording microrelief of a characteristic depth 0.1-0.8 x 10⁻¹² m is constructed in the photoresist layer. The microrelief received is a result of the detection of the diffracted object and reference waves interference process in the layer of the photoresist material with the waves lighting up the mark. After that the steel unprotected with the resist material is subjected to Ion-beam etching (argon vacuum etching). The degree of photoresist mask spraying is regulated by the functional surface temperature. Upon etching completion and photoresist residue removal the steel plate surface will take the shape of the holographic relief formed by ridges and grooves in the plate material.

It is also possible to form holographic relief on the metal bullion surface without utilizing a method of extrusion. For it the supposed mark location on the surface of an article shall undergo the sequence of procedures given above for the creation of holographic relief on the matrix functional surface.

The two above methods of creating holographic relief on the metal surface are used in variants 3 to 6 of the suggested method.

In variant 3 upon creation of the mark holographic microrelief on the article surface sections of macrorelief are constructed in the original microrelief with the depth considerably exceeding (over 1000 times) the typical parameter of the latter. This procedure can be performed utilizing approved methods such as electric spark broach machine. The two types of relief can be formed in the mark simultaneously in case the mark is transferred to the bullion surface by matrix extrusion.

With macrostructure within microrelief of the mark it becomes possible to determine the mark location on the surface of the article by any light or at any visual angle. However, visual identification of the whole mark image is fulfilled in a limited visual field that is characteristic of the image reconstruction on the bases of holographic recording. Yet, the information contained in the mark is reconstructed most effectively when the mark is exposed to coherent laser light.

Imitation of the mark by a method of halvanoplastics widely used for hologram copying is considerably hampered due to incommensurability of micro and macrorelief sizes that does not allow to receive a precise copy of a combination of the holographic record and the macroscope relief on the surface of precious metals with the help of a specially performed matrix. These difficulties are predetermined by the fact that the above mentioned incommensurability of two relief types impedes even pressure distribution to the mark surface resulting in considerable reduction in the pressing effort from the matrix at the joint of the combined relief elements and the matrix functional surface.

In variant 4 the mark is performed as a composite hologram. For it, at first, utilizing one of the above given methods of holographic microrelief application to the metal surface holographic microrelief of the mark image is formed. Following it or simultaneously with the relief formation an encoded hologram of a latent image is constructed. In order to receive an undistorted picture the reconstructing wave shall be identical to the reference wave. (See for example "Optical Holography", Managing Editor G. Kolfid, Moscow, "Mir", 1982, p. 146).

An encoded hologram of this kind can be received with the help of several reference beams of point sources located in a specially stipulated position or as a synthesized multiplex hologram comprising a combination of holograms of every symbol of the latent hologram (same, p. 206). A synthesized hologram is a hologram of pseudo-object as it can be constructed without an object utilizing some approved mathematical methods and computer operation (same, p. 225). A Fourier-hologram can be used as a synthesized hologram as it allows to form an object image by means of hologram Fourier-transformation (same, p. 179).

In case an encoded hologram is received with the help of several reference beams of point sources located in a specially stipulated position the latent hologram is constructed in the stage of the holographic microrelief formation of the mark image.

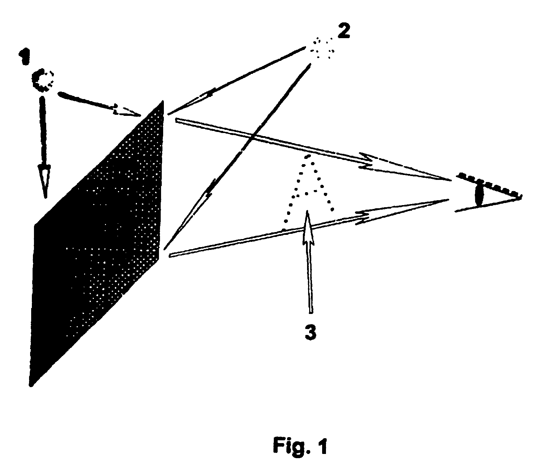

To identify the mark its hologram with a latent image is placed into the optical field of the reconstructing wave. This field is formed by the same number of point coherent light sources 1 and 2 that have the same location as reference beams in the phase of holographic recording of the latent hologram (Fig. 1). Thus, the latent hologram 3 can be visualized within a very limited visual field that can be achieved only by the mark manufacturer and, therefore, this hologram cannot be viewed by unauthorized persons. Yet, when trying to reconstruct the latent hologram with one beam of coherent light the only vision that will be achieved is a vague spot providing no information of use. Thus, the location of point sources of a reconstructing wave is the clue to the code for latent hologram visualization.

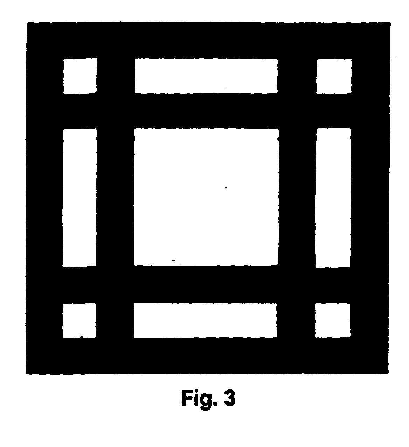

In case when the encoded hologram is received as a synthesized Fourierhologram the latent hologram is formed upon holographic microrelief beams or as a Fourier-hologram as it was in two preceding variants the multiplex hologram does not allow to see the original image. Diffraction beams emitted by holograms comprising a multiplex hologram serve an impediment to the latent hologram visualization. In order to overcome this obstacle and to identify the mark picture the above beams are cut off by an amplitude phase code mask with ports of transmittence for latent hologram beams. This mask is constructed in the phase of holographic microrelief formation and certain computerized methods (same, p. 141) allow to define a location of those sections of ridges and grooves in the encoded hologram microrelief that in the field of the latent hologram reconstructing wave form a required direction of the diffracted beams and discover distribution of these beams in the mask plane where they create ports of transmittence. When observing the microrelief through mask 4 located at a certain distance away from mark S non-transparent sections of the mask take up the Is light beams corresponding to the disguising holograms (see Fig. 3) and then observer 6 can see a dear picture that has been hidden before.

In variant 4 of the suggested method a film coating of amorphous adamantine substance thinner than a hologram is applied to holographic microrelief formed on the surface of the article made of precious metal.

This coating can be formed, for example, utilizing the method of ion plasma jet spray-coating of carbon. Providing a very thin coating on the hologram and preserving the holographic microrelief structure unchanged this adamantine film due to its property of high adhesion with precious metals and due to its chemical stability protects the mark holographic microrelief from damage and also prevents its imitation with the help of halvanoplastics. All the above factors make it practically impossible to illegally copy the microrelief without essential rupture of the latter and considerable distortion of the reconstructed image. Application of the adamantine film to the microrelief is performed when the depth of the film on ridge peaks exceeds the depth of the film in grooves that results in groove effective depth increase as the adamantine film refractive index equals 2.0 - 2.4 that allows to adjust the mark picture brightness.

In variant 6 the holographic microrelief on the surface of the article is formed as a multiplex composite hologram with microreliefs of its components shifted from each other at a distance shorter than a length of the reconstructing wave. Some parts of the composite hologram are coated with a transparent film of dielectric so that when the mark is visually identified in the reconstructing wave the, shift of the mark image components is neutralized.

In case a multiplex hologram consists, for example, of two holograms and each of them corresponds to one of the two parts of the mark picture image and the shift equals λ/4 with λ, standing for the length of an image reconstructing light wave there will be a phase shift of π radian between the light beams coming to the eye of the observer or to the screen of a recording device from two parts. In the point of superimposing of the beams coming from two parts the beams will extinguish each other due to the interference process and there will be observed a dark line in the image. If one part of the microrelief that corresponds to one part of the image is coated with a transparent film of dielectric with the refractive index **n** and depth **d** determined by fonnula **d(n-1) = λ/4** then when the is mark is lit with the wave of λ length both parts of the image will be lit evenly and there will be no dark line in the image.

When trying to directly copy the relief it will be necessary to remove the protection film and, therefore, the copied mark will reconstruct the image with a dark line indicating an unauthorized imitation. The type of dielectric (the above mentioned amorphous adamantine film can be used for it) and the depth of the film coating some part of the relief and made of this dielectric are the clue of the manufacturer who can change them from one lot to another that makes it practically impossible and economically inexpedient to attempt imitating this kind of mark.

Thus, the material presented in this paper proves that the suggested six variants in fact allow to perform reliable marking of an article and to identify its origin that signifies dependable protection of articles made of precious metals.

### Industrial applicability

The invention can be used, for example, for gold bullions of high standard of fineness offered on the bond market by banks when an appropriate mark on the item shall provide a reliable guarantee of its origin.

## Claims

1. Method of protection of articles made of precious metals from imitation with the difference lying in the fact that the mark image on the article surface is formed with the help of photolithography whereby the surface of an article made of gold or another precious metal is
a) covered with a layer of photoresist material within which a negative image of the mark is received and then the supposed mark location is coated with film made of amorphous adamantine substance utilizing the method of ion plasma jet spray-coating of carbon and after that the layer of photoresist material is etched with an organic solvent
or
b) coated with film made of amorphous adamantine substance utilizing the method of ion plasma jet spray-coating of carbon, then a layer of photoresist material is applied over the film coating and within it a preliminary image of the mark is received and after that amorphous adamantine coating not being protected with photoresist material is etched in oxygen plasma.

2. Method of protection of articles made of precious metals from imitation with a possibility of the mark (5) visual identification formed with the difference lying in the fact that a mark on the surface of an article made of gold or another precious metal is formed as
a) a holographic microrelief with sections of macrorelief and that the identification of the mark (5) is performed when its hologram (3) is placed into the field of the reconstructing wave
or
b) a composite hologram whereby a holographic microrelief of the mark picture is created with a latent encoded hologram in it and the identification of the mark (5) is carried out by means of visualization of the latent hologram picture when the composite hologram of the mark (5) is placed in the optical field of the wave reconstructing the encoded hologram
or
c) a holographic microrelief coated with a film of amorphous adamantine substance whereby the mark (5) is identified when its hologram (3) is placed in the field of a reconstructing wave
or
d) a composite hologram with microreliefs of its components shifted from each other at a distance shorter than a length of the reconstructing wave whereby some parts of the composite hologram are coated with a transparent film of dielectric so that when the mark (5) is visually identified in the reconstructing wave the shift of the mark image components is neutralized.

3. Method according to claim 2 whereby sections of macrorelief are formed using a method of electric spark.

4. Method according to claim 2 whereby the encoded hologram on the holographic microrelief of the mark picture is constructed using several reference beams of point sources located in a specially stipulated position and whereby the reconstructing wave for the mark identification will be obtained by placing coherent light sources (1; 2) to the same points where the reference beams were located.

5. Method according to claim 4 whereby the encoded hologram on the holographic microrelief of the mark picture is constructed as a synthesized multiplex hologram consisting of a complex of holograms of each symbol of the latent hologram (3).

6. Method according to claim 5 whereby in a synthesized multiplex hologram every particular hologram of the mark (5) latent hologram symbols is received by removal of microrelief ridges in microsections establishing in the .aggregate a negative image of a 2-D Fourier-transformation of a latent hologram symbol.

7. Method according to one of the claims 4 to 6 whereby the encoded hologram is disguised by applying to it another multiplex hologram consisting of holograms of several images and whereby in order to visualize the latent hologram (3) in this case it is necessary to use a preliminarily prepared amplitude phase code mask with ports of transmittence for latent hologram beams.

8. Method according to claim 2 whereby the film coating is thinner on the microrelief ridges and deeper on its grooves.

## Patentansprüche

1. Verfahren zum Schutz von Gegenständen aus Edelmetallen vor der Nachahmung, **dadurch gekennzeichnet, dass** das Kennzeichnungsabbild auf der Oberfläche des Gegenstandes mit Hilfe der Fotolithografie gebildet wird, wobei die Oberfläche eines Gegenstandes aus Gold oder einem anderen Edelmetall
a) mit einer Schicht aus Fotoresistmaterial beschichtet wird, in der ein negatives Abbild der Kennzeichnung erhalten wird, und sodann die vorgesehene Kennzeichnungsstelle mit Hilfe des Verfahrens der lonenplasmajet-Kohlenstoffsprühbeschichtung mit einem Film aus einer amorphen, diamantartigen Substanz beschichtet wird und anschließend die Schicht aus Fotoresistmaterial mit einem organischen Lösungsmittel weggeätzt wird oder
b) mit Hilfe des Verfahrens der Ionenplasmajet-Kohlenstoffsprühbeschichtung mit einem Film aus einer amorphen, diamantartigen Substanz beschichtet wird, sodann eine Schicht aus Fotoresistmaterial über dem Filmüberzug aufgetragen wird und darin ein vorläufiges Abbild der Kennzeichnung erhalten wird und danach der nicht durch Fotoresistmaterial geschützte amorphe, diamantartige Überzug im Sauerstoffplasma weggeätzt wird.

2. Verfahren zum Schutz von Gegenständen aus Edelmetallen vor der Nachahmung mit einer Möglichkeit zur visuellen Identifikation (Erkennung) der gebildeten Kennzeichnung (5), **dadurch gekennzeichnet, dass** auf der Oberfläche eines Gegenstandes aus Gold oder einem anderen Edelmetall eine Kennzeichnung gebildet wird in Form
a) eines holografischen Mikroreliefs mit Makroreliefabschnitten und dass zur Erkennung der Kennzeichnung (5) deren Hologramm (3) in das Wellenfeld der rekonstruierenden Welle eingebracht wird
oder
b) eines zusammengesetzten Hologramms, wobei ein holografisches Mikrorelief des Kennzeichnungsbildes mit einem darin enthaltenen kodierten latenten Hologramm erzeugt wird und zur Erkennung der Kennzeichnung (5) das latente Hologrammbild erkennbar gemacht wird, indem das zusammengesetzte Hologramm der Kennzeichnung (5) in das optische Wellenfeld der das kodierte Hologramm rekonstruierenden Welle eingebracht wird
oder
c) eines holografischen Mikroreliefs mit einem Überzug aus einer amorphen, diamantartigen Substanz, wobei zur Erkennung der Kennzeichnung (5) deren Hologramm (3) in das Wellenfeld einer rekonstruierenden Welle eingebracht wird
oder
d) eines zusammengesetzten Hologramms, wobei die Mikroreliefs der Komponenten des Hologramms relativ zueinander um einen Abstand verschoben sind, der kürzer als eine Wellenlänge der rekonstruierenden Welle ist, wobei einige Teile des zusammengesetzten Hologramms mit einem transparenten Film aus einem dielektrischen Material beschichtet sind, so dass bei der Erkennung der Kennzeichnung (5) in der rekonstruierenden Welle die Verschiebung der Komponenten des Kennzeichnungsabbildes ausgeglichen wird.

3. Verfahren nach Anspruch 2, wobei Makroreliefabschnitte mit Hilfe eines Funkenerosionsverfahrens gebildet werden.

4. Verfahren nach Anspruch 2, wobei das kodierte Hologramm auf dem holografischen Mikrorelief des Kennzeichnungsbildes mit Hilfe von mehreren Referenzstrahlen konstruiert wird, die von Punktquellen ausgehen, die sich an einer speziell vorgesehenen Stelle befinden, und wobei die rekonstruierende Welle zur Erkennung der Kennzeichnung erhalten wird, indem kohärente Lichtquellen (1; 2) an den selben Punkten platziert werden, an denen die Referenzstrahlen sich befunden haben.

5. Verfahren nach Anspruch 4, wobei das kodierte Hologramm auf dem holografischen Mikrorelief des Kennzeichnungsbildes als ein synthetisches Multiplexhologramm konstruiert wird, das aus einem Komplex von Hologrammen von jedem Symbol des latenten Hologramms (3) besteht.

6. Verfahren nach Anspruch 5, wobei in einem synthetischen Multiplexhologramm jedes einzelne Hologramm der Symbole des latenten Hologramms der Kennzeichnung (5) erhalten wird, indem Mikroreliefhöhen in Mikroabschnitten, die zusammengenommen ein negatives Abbild einer 2D-Fourier-Transformation eines latenten Hologrammsymbols erzeugen, entfernt werden.

7. Verfahren nach einem der Ansprüche 4 bis 6, wobei das kodierte Hologramm getarnt wird, indem ein weiteres, aus den Hologrammen mehrerer Abbilder bestehendes Multiplexhologramm auf dem kodierten Hologramm aufgetragen wird, und wobei es zur Erkennung des latenten Hologramms (3) in diesem Fall notwendig ist, eine zuvor vorbereitete Amplituden-Phasen-Kodemaske mit Durchlassöffnungen für latente Hologrammstrahlen zu verwenden.

8. Verfahren nach Anspruch 2, wobei der Filmüberzug auf den Mikroreliefhöhen dünner und auf den Mikrorelieftiefen dicker ist.

## Revendications

1. Procédé pour protéger des articles réalisés en métaux précieux vis-à-vis d'une imitation, la différence résidant dans le fait que l'image de la marque sur la surface de l'article est formée à l'aide de la photolithographie, auquel cas la surface d'un article réalisé en or ou en un autre métal précieux est
a) recouverte d'une couche d'un matériau de photoresist, dans lequel une image négative de la marque est reçue, puis l'emplacement supposé de la marque est recouvert d'un film formé d'une substance adamantine amorphe moyennant l'utilisation du procédé de dépôt de carbone par projection d'un jet de plasma ionique, et, après cela, la couche de matériau de photoresist est attaquée par un solvant organique, ou
b) recouverte par un film formé d'une substance adamantine amorphe moyennant l'utilisation du procédé de dépôt de carbone utilisant la projection d'un jet de plasma ionique, puis une couche de matériau de photoresist est appliquée sur le revêtement formé du film et l'image préliminaire de la marque est reçue dans ce matériau, puis le matériau de revêtement adamantin amorphe non protégé par le matériau de photoresist est attaqué dans un plasma d'oxygène.

2. Procédé pour protéger des articles réalisés en métaux précieux vis-à-vis d'une imitation avec une possibilité d'identification visuelle de la marque (5), formée avec la différence résidant dans le fait qu'une marque sur la surface d'un article réalisé en or ou en un autre métal précieux est formée en tant que
a) une micromoulure holographique avec des sections de la micromoulure et que l'identification de la marque (5) est exécutée lorsque son hologramme (3) est placé dans le champ de l'onde de reconstitution,
ou
b) un hologramme composite, auquel cas une micromoulure holographique de l'image de la marque est créée avec un hologramme latent codé, en elle, et l'identification de la marque (5) est exécutée au moyen de la visualisation de l'image d'hologramme latent lorsque l'hologramme composite de la marque (5) est placé dans le champ optique de l'onde reconstituant l'hologramme codé,
ou
c) une micromoulure holographique recouverte d'un film de substance adamantine amorphe, auquel cas la marque (5) est identifiée lorsque son hologramme (3) est placé dans le champ d'une onde de reconstitution,
ou
d) un hologramme composite comportant des micromoulures, dont les micromoulures de ses composantes sont décalées les unes des autres à une distance inférieure à une longueur de l'onde de reconstitution, auquel cas certaines parties de l'hologramme composite sont recouvertes par un film transparent de diélectrique de sorte que lorsque la marque (5) est identifiée visuellement dans l'onde de reconstitution, le décalage des composantes de l'image de la marque est neutralisé.

3. Procédé selon la revendication 2, selon lequel des sections de macromoulure sont formées en utilisant un procédé utilisant une étincelle électrique.

4. Procédé selon la revendication 2, selon lequel l'hologramme codé sur la micromoulure holographique de l'image de la marque est constitué moyennant l'utilisation de plusieurs faisceaux de référence de sources ponctuelles situées dans une position stipulée spécialement, et selon lequel l'onde de reconstitution pour l'identification de la marque est obtenue par mise en place de sources de lumière cohérente (1; 2) aux mêmes emplacements que ceux où les faisceaux de référence étaient situés.

5. Procédé selon la revendication 4, selon lequel l'hologramme codé sur la micromoulure holographique de l'image de la marque est constitué sous la forme d'un hologramme multiplex synthétisé constitué par un complexe d'hologrammes de chaque symbole de l'hologramme latent (3).

6. Procédé selon la revendication 5, selon lequel dans un hologramme multiplex synthétisé, chaque hologramme particulier de symboles d'hologrammes latents de la marque (5) est reçu par retrait de nervures de micromoulures dans des microsections établissant dans l'agrégat une image négative d'une transformation de Fourier bidimensionnelle d'un symbole d'hologramme latent.

7. Procédé selon l'une des revendications 4 à 6, selon lequel l'hologramme codé est masqué par application, sur cet hologramme, d'un autre hologramme multiplex constitué d'hologrammes de plusieurs images, et selon lequel pour visualiser l'hologramme latent (3) dans ce cas il est nécessaire d'utiliser un masque de code de phase et d'amplitude préparé au préalable avec des orifices de transmission pour des faisceaux d'hologrammes latents.

8. Procédé selon la revendication 2, selon lequel le revêtement en forme de film est plus mince sur les nervures de micromoulures et plus profond dans ses rainures.
